# EUROPEAN PATENT SPECIFICATION

(11) **EP 0 556 067 B1**
(45) Date of publication and mention of the grant of the patent: **16.05.2001**
(21) Application number: 93301042.3
(22) Date of filing: 12.02.1993
(51) Int. Cl.: H04N 1/00

(54) **Multi-function data capture devices for computers**
Mehrzweckdatenerfassungsgeräte für Rechner
Dispositif de saisie de données multi-fonctionnelles pour ordinateurs

(30) Priority: 13.02.1992 US 835229
(43) Date of publication of application: 18.08.1993
(60) Divisional application: 97117654.0
(73) Proprietor: Aharonson, Dov, Lexington, Massachusetts 02173 (US); Aharonson, Ophira Rosolio, Lexington, Massachusetts 02173 (US)
(72) Inventor: Aharonson, Dov, Lexington, Massachusetts 02173 (US); Aharonson, Ophira Rosolio, Lexington, Massachusetts 02173 (US)
(74) Representative: Allsop, John Rowland

(56) References cited:
- EP-A- 0 411 698
- WO-A-92/03884

## Description

The present invention relates to multi-function data capture devices for computer interfacing being more specifically concerned with the data entry of both typed and similar documents and optically scanned image data into computer and other processing or similar systems.

The art is replete with various methods of data capture for computerized data processing systems and the like, each using separate and different devices, such as:
a) the use of text input devices (keyboard) for data entry of typed and edited alphanumeric documents;
b) the use of image capture devices (scanner) electronically to capture drawings, photographs and textual alphanumeric documents, such scanners varying from hand scanners, page scanners to large scale drawing scanner; and
c) the use of local and/or remote communication lines for transfer of data generated elsewhere by such devices above-mentioned.

Separate keyboards are very widely used as input and control devices adjacent computers and multi-processor systems and the like, each having a fixed number of keys, local indicator lamps, internal control units and a communication interface. The internal control unit monitors the keys, analyzes and filter the keystrokes and generates the appropriate codes sent through the communication port to the host computer. In addition, the control unit handles the indicator lamps on the keyboard. Examples of such are the following: Northgate OmniKey Keyboard (101N1, 102, Ultra); Key Tronic 101 keyboard; Cherry; BTC 5339, FC3001.

In the daily operations of any computerized environment, however, much of the data captured from external sources or from old files is in the form of printed documents (text, graphics, photos and images). Scanning of documents into electronic format is thus an integral part of the computerized personal working station, also.

Separate, independent scanners are accordingly also widely used, generally of two basic types: flat bed scanners and hand-held scanners. Such flat bed scanners embody an electro-mechanical system for document feeding and handling, an electro-optical unit to convert the scanned optical data into electronic signals, an operator control panel, an electronic control and processing unit to control the various system operations, the user input and indicators, and to filter and compress scanned data and generally handle communications with the host computer, and embodying a power supply unit for the electrical and electronic components. This type of scanner can handle high resolution and accurate scanning of a complete range of standard document sizes. Examples of such are the following: AVR 3000/GS Plus; HP Scan-Jet Plus; Microtek MSF-300G; The Complete Flatbed Scanner; UMAX UG80; Abaton Scan 300/GS; Canon IX-30F; Dest PC Scan 3000; Xerox Datacopy GS Plus.

Hand scanners have similar components including an electro-mechanical unit for scan speed detection, an electro-optical unit to convert the scanned optical data into electronic signals, control switches and indicators, and an electronic control unit to control the scanning process and to handle communications with the host computer. This type of scanner, however, is far less accurate than the flat bed scanner, since the motion of the scanner along the scanned document is done by hand; and thus such is limited to lower resolution, and consequently to applications which do not require a high level of accuracy. This type is also limited to a narrow scanning path up to about 4.5" only. Examples of such are the following: Nisca Inc. Niscan/GS; Logitech Inc. Scanman 256/GS; The Complete Half-Page Scanner/GS; DFI Inc. DFI CHS-4000; Marstek Inc. Mars M-6000 CG; Mirgraph Inc. Mirgraph CS-4096; KYE International Corp. Geniscan GS-C105, Geniscan GS-B105G; Mouse Systems, PC PageBrush/Color; NCL America Clearscan Model 400; Prolab Technology Co. Proscan PS-4000C, PS-4200c.

While currently a keyboard is attached adjacent nearly every computerized working station, such is not the case for scanners. The customary flat bed scanner is far too large to fit on many user tables in addition to the working station CRT-monitor and the keyboard. Due to its size and cost, furthermore, the scanner is generally placed in a central common location within the company and is actually a shared and common resource.

While a hand scanner, introduced to provide a solution for "personal scanning" may be small enough to be placed near or at the work station, such a device is at best an inaccurate, low resolution apparatus with limited (4.5") scan width which is much less than the width of standard office documents (8.5" x 11"). It should be pointed out, moreover, that hand scanner operation is neither easy nor simple.

Since both keyboard and scanner methods of data capture for computerized systems have required different and separate devices, the daily operation is cumbersome and often inefficient. This creates a myriad of problems: file cabinets take up valuable floor space, misfiling causes confusion, paper is easily destroyed, etc. In addition, each of the distinct devices used for data entry has its own direct and indirect costs, and requires its own valuable table space.

Of the integrated computer keyboard with other facilities which do exist, reference may be made to prior art patent publications EP-A-0543895 having a publication date of 5 March 1992 as of its family member WO 92/03884, and EP-A-0411698.

The former disclosure relates to a general purpose computer keyboard which combines in a single unit, multiple synergistic functions such as a document scanner, speaker phone and a modem.

The latter disclosure relates to a combined portable computer and facsimile machine which obviates the prior need for a user to have to carry individual compatible units to the portable computer, such as an image scanner and facsimile adapter.

Neither disclosure shows a document insertion guideway leading from a slot in the housing beneath the keyboard.

It is to the improvement of this requirement for different and usually separate-location data-capture keyboard and scanner devices that the present invention, in a principal measure, is directed; the invention being concerned with the integration of the devices in a novel, efficient and relatively low cost manner.

A primary object of the invention, accordingly, is to provide a new and improved method of and station apparatus for integrating keyboard and scanner data capture devices mechanically and electrically into a single apparatus for interfacing with a computer or the like.

A further object is to provide in such a novel integrated apparatus for sharing keyboard and scanner electronic functions.

Other and further objects with be explained hereinafter and are more particularly delineated in the appended claims.

According to the invention there is provided an integrated typed data and optically scanned data capture station as claimed in claim 1.

Other features and advantages of the invention will now be presented and described with reference to the accompanying drawings wherein;
Fig 1 is a system diagram of the integrated apparatus of the invention;
Fig 2 is a longitudinal section and side view showing details of the construction;
Fig 3 is a similar view showing the document feed power train of the scanner;
Fig 4 is an outline top or plan view; and
Fig 5 is an exploded isometric view showing the various layers of the apparatus before integrated assembly.

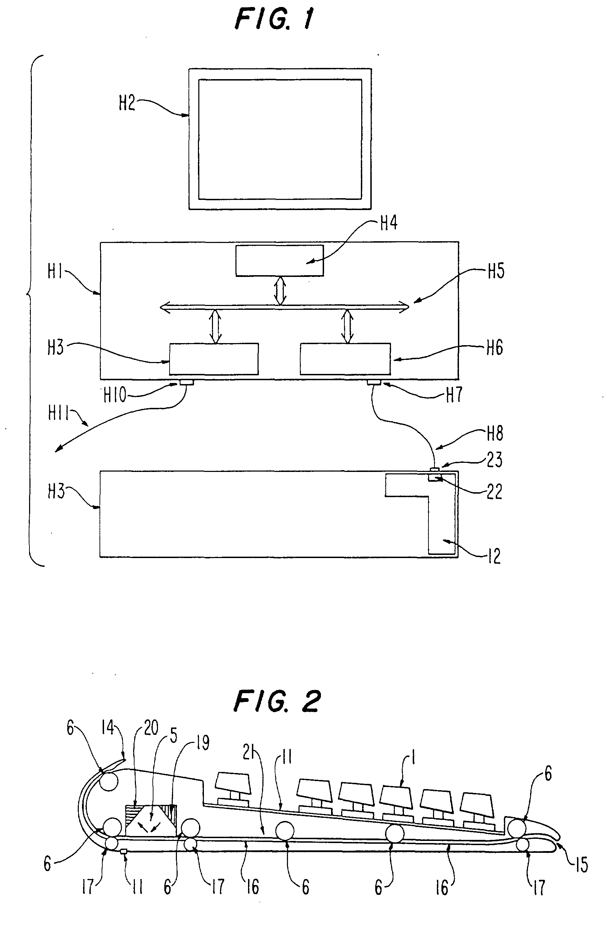

Before proceeding to a description of the preferred construction of Figs 1-3, it is believed that an overview of the philosophy and features underlying such construction will be useful in appreciating the context of the invention and its significance in the art.

As above explained, the scanner-keyboard station apparatus of the invention integrates the two basic methods for data capture: typing data using a keyboard, and scanning documents using a scanner. The integrated scanner-keyboard is made similar in shape and in sizes to the standard keyboard; but unlike a conventional keyboard, the scanner-keyboard integrates also high-quality scanning capabilities.

Integration of the scanner into the keyboard enables bringing high quality scanning to each personal computer or work station without losing more table space for additional equipment. The mechanical structure is designed to support an accurate feeding system for the integrated scanner gaining high quality scanning without the extra space normally required for a bed scanner.

In addition, having the scanner integrated with the keyboard and closely related to the computer enables major cost reductions and efficiency. Among such cost reduction considerations are those achieved by the use of the host computer for power supply needs and for display of scan status and modes; by the use of the keyboard keys for operator control of the scanner; by having one external packaging for both devices; by using the internal keyboard frame to support the scanner mechanical feeding system; and by sharing the same electronic board, cpu, memory and communication with the computer by both the keyboard and the scanner.

The major advantage of the scanner keyboard of the invention, of course, is the ability to enter at each user station both typed-in information and high quality scanned documents, using a single, common and compact device.

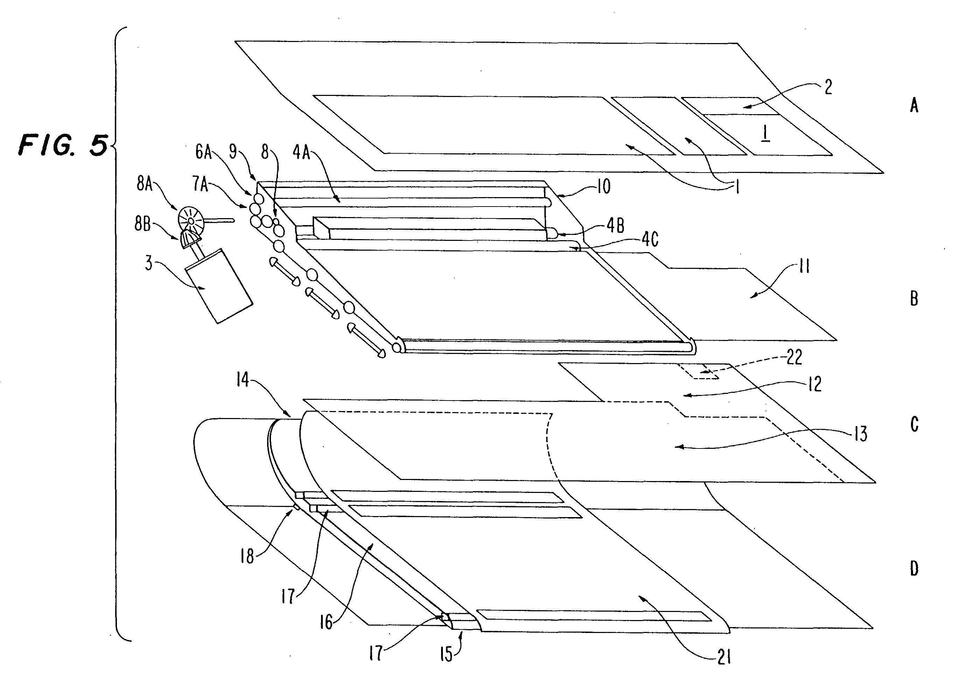

The basic scanner-keyboard station of the invention comprises the following basic components: a) external packaging (shown at A and D in Fig. 5, as later more fully discussed); b) internal mechanical frames for keyboard and scanner (shown at 9, 10 and 11); c) document or paper feed system (shown at 3-4-6-7-8-17); d) document feed path (shown at 14-15-16-21); e) electronic control unit (shown at 12); and f) communication facility (shown at 12, 22 and 23).

Referring to Fig. 1, the integrated scanner-keyboard of the invention is shown at H3, interconnected with a host computer main unit H1 having its monitor H2, main cpu H4, internal bus H5, communication controller H6 and port H7 to the scanner-keyboard H1, the interconnecting cable being illustrated at H8. For possible facsimile use, later explained in detail, a fax modem controller may be provided at H9. Connection to the telephone network is shown effected by a cable Hll from the communications port H10.

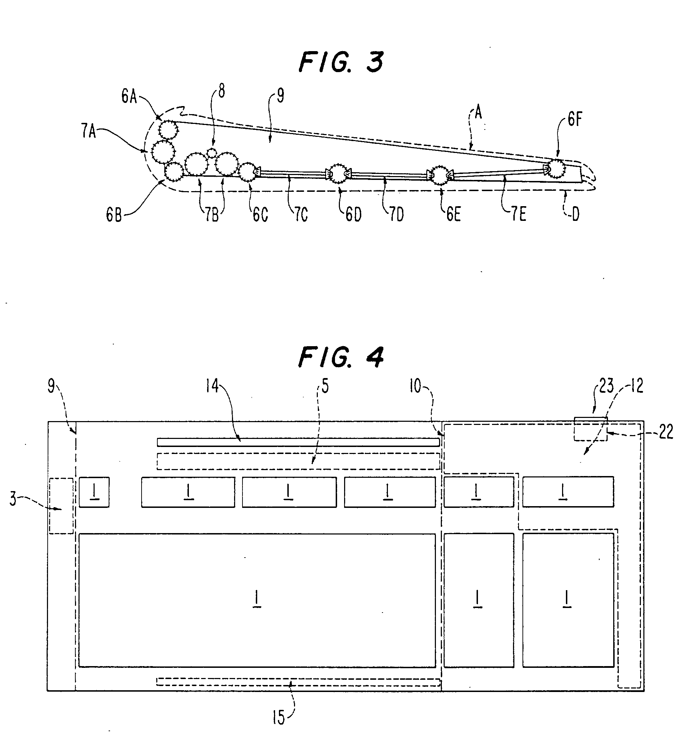

Turning to the scanner-keyboard assembly of the invention, in the plan and longitudinal sectional views of Figs. 4 and 2, the keyboard keys 1 are shown mounted upon an internal panel 11 serving as the mechanical support therefor, within an internal frame with side walls 9, 10 that also support the scanner assembly below the keyboard, )with its document guide path 16, 21 under the keyboard, document feed inlet 14 located beyond the top edge of the keyboard, and document outlet 15 disposed beyond the lower edge, adjacent the keyboard user.

As more particularly shown in the exploded view of Fig. 5, there are preferably four principal layers to the integrated scanner-keyboard construction of the invention: the uppermost scanner-keyboard packaging plate with the keys, labelled A; an internal mechanical support and document feeding system B; a main scanner-keyboard printed )circuit board C; and the base or bottom guide plate D.

In preferred form, as earlier stated, the overall scanner-keyboard external packaging is shown in shape and size(s) similar to standard keyboard packaging. In the internal common mechanical frame system for the keyboard and the scanner, left and right-side support frame walls 9 and 10, before mentioned, mount the keyboard support panel 11 and, in addition, also support, below and coextensive, at least in part, with the keyboard panel, an accurate scanner document feed system including transversely extending powered feeding rollers 4, non-powered bottom idle rollers 17, an electronic drive motor 3, and appropriate gear drives 8A and 8B and powered rollers 6A-6C for the integrated scanner, as later more fully described, such construction assuring high quality scanning. The same structure is used also to support the electronic printed circuit board 12,13.

As schematically inferred in Fig. 3, the documents (not shown) inserted into the downwardly concavely curved feed inlet slot 14 beyond the top edge of the keyboard are carried downwardly into the planar document guide path bounded by the upper plate 21 and the lower outer panel 16, thence horizontally underneath and coextensively with the area of the keyboard between the top rollers 6B, 6C and 6A supported by the frame, and bottom idler rollers 17 supported by the outer bottom panel 16; thence emerging at the sligntly rising outlet slot 15, facilitating the right-most drive roller 6A and idler roller 17 in exiting or ejecting the scanned document to the user at exit slot 15.

During such feeding of the document, it passes the optical scanner head 5 with its lamp 19 and sensors 20, Fig. 2, of any well-known type, which, in conventional fashion, converts the scanned image data into electrical signals. A suitable scanner head for this purpose may, for example, be those used in the above-referenced scanner equipments.

The electronic circuit board 12,13 is mounted above the upper cover plate 21 of the document guide path, but its circuits, in well-known fashion, control all keyboard and scanner operations. The scanning, handling of keyed data, and transmission to the host computer are controlled by the internal main board 12 with its own cpu and memory. The same board is used to mount the conventional keyboard keys section 13. The indicators 2, disposed on the keyboard, Figs. 1 and 2, such as conventional LED devices, will indicate both keyboard and scanner status. The scanner-keyboard, as before stated, may use the power source of the host computer. Thus, the internal mechanical frames for the keyboard and scanner comprise the left and right support frames 9 and 10 mounted on the keyboard support panel 11, with the two frames used to support an accurate feeding system, gaining high quality scanning. The same structure is used also to support the keyboard keys and electronic printed circuit 12-13.

The electric motor 3 carries a first transmission system of bevel and the before-mentioned drive gears 8A and 8B. This system transfers power from the motor to powered rollers 6B and 6C. A second transmission system is provided at 7A to transfer power from the powered roller 6B to the powered roller 6A. A third transmission system 7C, 7D, 7E transfers power from rollers 6C to rollers 6D, 6E and 6F disposed laterally along the side of the apparatus.

The paper or document guide path defined by an upper guide cover plate 21 and a lower outer surface 16 mounting the non-powered or idler rollers 17, provides for smooth paper feeding.

Communication with the host computer H1 by either parallel or serial interface ports, outputting the keyboard typed data and/or the document-scanned data, is shown schematically at control circuit 22 and connector 23.

The document guide bottom plate is shown hinged at 18 to permit its opening for ready maintenance or other access.

In operation of the integrated station of the invention, the user types in data at the keyboard first as if it were a regular keyboard. The user starts the scanning process either by scan command from the host computer (slave mode), or simply by inserting a document into the scanner feeding slot 14 (master mode). Once the document is scanned, it emerges through the exit slot 15 for retrieval by the user. The setting of scanning parameters can be done off-line using the keyboard keys, or online from the host computer system H1 on one application command.

Further in connection with the communication with the host computer, such is schematically shown equipped with a special driver software/hardware interface, to communicate with the scan-keyboard. This driver enables the regular functions of the keyboard and the two before-mentioned modes of scanner operation:
a) Master mode - the scanner automatically starts scanning, initiates communications protocol with the host computer and the host receives the scanned data into a "spool" directory where it is stored for application to retrieve it; and
b) Slave mode - the host computer initiates the scanning process utilizing a system command. (SCAN [optional parameters] file name) or special applications commands.

An example of the beneficial operation enabled by the invention is the keying of medical patient's records, followed by scanning the physician diagnosis and the laboratory tests and results. As another example, a document received by mail can be filed in the computer memory along with its scanned image instead of using a paper-filling system.

The present invention can also have a major impact on office operation using copying machines and facsimile machines. Today, due to high costs and space requirements, such are office-shared resources. With the integrated apparatus of the present invention, this equipment may often be omitted and replaced by the integrated scanner-keyboard with a personal computer or any other working station. Copying machines, furthermore, are often used to duplicate documents for distribution or filing. Such can be replaced by a scanner-keyboard of the invention with a PC or any other host, using the office or external network for distribution of information and using a laser printer for production of hard copies.

The facsimile or FAX machine, indeed, may be fully replaced by using a computer H1 equipped with internal fax modem board H9, Fig. 1, and a personal integrated scanner of the invention. Suitable fax boards may be the following: Intel 7782 StatiFAXion; The Complete PC Inc. Communicator 5828; Cardinal NM0510, NM0770; Haves JT fax 9600B Int.; PowerUser Sendfax 24/48, 24/96; ATI 2400ETC Internal; Zoom 9624 Send/receive Int. Fax Modem; ADTECH Datafax 2400modem/9600Fax. This configuration, indeed, has some major advantages over the regular fax machines:
Security - the received fax on the computer can be protected from unauthorized reading by regular security tools such as password, magnetic card, etc.
Quality - both for receive and transmit modes, additional inexpensive software tools can be used to improve the images. The office printer can be used for the production of high quality hardcopy output.
Costs - The additional FAX/modem board required, using the equipment of the invention, is considerably less expensive than the cost of fax machines.

More generally, in summary, advantages stemming from the invention include:
1. Reduced space required for the various data capture devices. Scan-keyboard actually brings scan/copy of a document to efficient desktop computer operation without losing any desk space.
2. Enhanced data input operation, ability to combine data entry of typed alphanumeric information and high quality scanning of drawings and documents.
3. Improved hardware price/performance and reduced direct costs required for data capture devices: instead of keyboards, scanner and fax machines; only the scanner-keyboard of the invention is required, for which only one port of the computer system is sufficient.
4. Reduced indirect costs such as: maintenance costs, down-time costs, amortization, etc.
5. Dramatic improvement in use of many computer applications, such as office and desktop publishing, engineering, educational and medical applications, etc.

## Claims

1. An integrated typed data and optically scanned capture station for interfacing with a computer comprising a housing (9, 10, 11) mounting a keyboard (1) and an electro-optical scanner (5, 19, 20), electronic control and signal processing circuits (12, 13) contained within the housing (9, 10, 11) for controlling electronic data developed by typing upon the keyboard (1) and electronic signal data generated by the optical scanning, and means for interfacing such data with an external computer (H1) characterised by the provision of a slot opening (14) for receiving a document to be scanned situated to the rear of the keyboard (1) which is positioned on the top of the housing (9, 10, 11), and a document insertion guideway (16, 21) leading from the slot opening (14) past the optical scanner (5, 19, 20) located within the housing (1) and to beneath the keyboard (1) and to an exit slot (15) in the housing (1) for the document after scanning.

2. An integrated typed data and optically scanned data capture station as claimed in claim 1 and in which the electronic control and signal processing circuits (12, 13) control such functions as CPU, memory and communication with the external computer (H1).

3. An integrated typed data and optically scanned data capture station as claimed in claims 1 or 2 and in which the computer interfacing includes means at the scanner (5) for enabling the scanner automatically to start scanning upon insertion of the document in said document guide slot opening (14) in a master mode and to initiate communications protocol with the computer (H1) so that the computer (H1) may receive the scanned data and store the same for retrieval.

4. An integrated typed data and optically scanned data capture station as claimed in claim 1 and in which the computer interfacing includes means for enabling the computer (H1) to command the scanning by the scanner (5) in a slave mode.

5. An integrated typed data and optically scanned data capture station as claimed in claim 3 and in which the computer interfacing also includes means for enabling the computer to command the scanning by the scanner in a slave mode.

6. An integrated typed data and optically scanned data capture station as claimed in claim 1 and in which the computer (H1) is provided with an internal fax modem board (H9) interfacing with the scanner (5) to enable the integrated station to substitute for facsimile and copy operating.

## Patentansprüche

1. Integrierte Datenerfassungsstation zum Erfassen bzw. Eingeben von Daten über Tastatur und optisches Scannen und zum Anschluß an einem Computer, mit einem Gehäuse (9, 10, 11), mit einer Tastatur (1) und mit einem elektrooptischen Scanner (5, 19, 20), mit elektronischen Steuer- und Signalverarbeitungsschaltungen (12, 13), die im Gehäuse (9, 10, 11) aufgenommen sind, zur Steuerung elektrischer, durch Betätigen der Tastatur (1) generierter Daten sowie zur Steuerung von durch das optische Abtasten generierter elektronischer Signaldaten, und mit Mitteln, die eine Datenverbindung (Interface) mit einem externen Computer (H1) bilden, **gekennzeichnet**
durch eine Schlitzöffnung (14) zur Aufnahme eines zu scannenden Dokumentes, welche an der Rückseite der an der Oberseite des Gehäuses (9, 10, 11) angeordneten Tastatur (1) vorgesehen ist, sowie
durch eine Dokumenteinlaß-Führung (16, 21), die von der Schlitzöffnung (14) an dem innerhalb des Gehäuses (1) angeordneten optischen Scanner (5, 19, 20) vorbei und entlang der Tastatur (1) an einen am Gehäuse (1) vorgesehenen Ausgangsschlitz (15) für das Dokument nach dem Scannen führt.

2. Eine integrierte Datenerfassungsstation zum Erfassen bzw. Eingeben von Daten über Tastatur und optisches Scannen wie im Anspruch 1 beansprucht und bei der die elektronischen Steuer- und Signalverarbeitungsschaltungen (12, 13) Funktionen wie CPU, Speicher und Kommunikation mit dem äußeren Computer (H1) steuern.

3. Eine integrierte Datenerfassungsstation zum Erfassen bzw. Eingeben von Daten über Tastatur und optisches Scannen wie in den Ansprüchen 1 oder 2 beansprucht und bei der das Interface zum Computer Mittel am Scanner (5) aufweist, um den Scanner zu ermöglichen, das Scannen automatisch beim Einbringen eines Dokuments in die erwähnte Dokumentführung-Schlitzöffnung (14) in einem Master-Mode zu starten und ein Kommunikationsprotokoll mit dem Computer (H1) zu erstellen, so daß der Computer (H1) die eingescannten Daten empfangen und diese für ein Wiedergewinnen bzw. für eine Abfrage speichern kann.

4. Eine integrierte Datenerfassungsstation zum Erfassen bzw. Eingeben von Daten über Tastatur und optisches Scannen wie im Anspruch 1 beansprucht und bei der das Interface zum Computer Mittel aufweist, um den Computer (H1) zu ermöglichen das Abtasten durch den Scanner (5) in einem Slave-Mode über einen Befehl zu veranlassen.

5. Eine integrierte Datenerfassungsstation zum Erfassen bzw. Eingeben von Daten über Tastatur und optisches Scannen wie im Anspruch 3 beansprucht und bei der das Computer-Interface Mittel aufweist, um dem Computer zu ermöglichen, das Abtasten durch den Scanner im einem Slave-Mode durch Befehl zu veranlassen.

6. Eine integrierte Datenerfassungsstation zum Erfassen bzw. Eingeben von Daten über Tastatur und optisches Scannen wie im Anspruch 1 beansprucht und bei der der Computer (H1) mit einer internen Faxmodem-Karte (H9) versehen ist, die mit dem Scanner (5) zusammenwirkt, um die integrierte Datenerfassungsstation in die Lage zu versetzen, Fax- und Kopierer-Funktionen zu übernehmen.

## Revendications

1. Poste intégré de capture de données dactylographiées et de données scannêes par un moyen optique, destiné à être relié à un ordinateur, comprenant un carter (9, 10, 11) sur lequel sont montés un clavier (1) et un scanner électro-optique (5, 19, 20), des circuits de commande électronique et de traitement de signaux (12, 13) contenus dans le carter (9, 10) pour commander les données électroniques dactylographiées par l'intermédiaire du clavier (1) et les données de signal électronique générées par le scannage optique, ainsi que des moyens destinés à relier ces données à un ordinateur externe, caractérisé en ce qu'il est prévu une fente (14) destinée à recevoir un document à scanner, située à l'arrière du clavier (1) qui est positionné au-dessus du carter (9, 10, 11), et un guide d'insertion de document (16, 21) conduisant depuis la fente (14) jusque devant le scanner optique (5, 19, 20) situé à l'intérieur du carter (1) et en dessous du clavier (1), puis jusqu'à une fente (15) de sortie du document après scannage, aménagée dans le carter (1).

2. Poste intégré de capture de données dactylographiées et de données scannées par un moyen optique, selon la revendication 1, dans lequel les circuits de commande électronique et de traitement de signaux (12, 13) commande les fonctions telles que la CPU, la mémoire et les communications avec l'ordinateur externe (H1).

3. Poste intégré de capture de données dactylographiées et de données scannées par un moyen optique, selon la revendication 1 ou 2, dans lequel l'interface de l'ordinateur comprend des moyens situés au niveau du scanner (5) pour permettre au scanner de démarrer automatiquement le scannage lors de l'insertion du document dans ladite fente de guidage de document (14), en mode maître, et d'amorcer un protocole de communication avec l'ordinateur (H1) de telle sorte que l'ordinateur (H1) puisse recevoir les données scannées et les; stocker pour récupération.

4. Poste intégré de capture de données dactylographiées et de données ecannées par un moyen optique, selon la revendication 1, dans lequel l'interface de l'ordinateur comprend des moyens destinés à permettre à l'ordinateur (H1) de commander le scannage par le scanner (5), en mode esclave.

5. Poste intégré de capture de données dactylographiées et de données scannées par un moyen optique, selon la revendication 3, dans lequel l'interface de l'ordinateur comprend également des moyens destinés à permettre à l'ordinateur de commander le scannage par le scanner, en mode esclave.

6. Poste intégré de capture de données dactylographiées et de données scannées par un moyen optique, selon la revendication 1, dans lequel l'ordinateur (H1) est pourvu d'une carte modem-fax interne (H9) reliée au scanner (5) pour permettre au poste intégré de jouer le rôle d'un dispositif de télécopie et de copie.
